(19)

Europäisches
Patentamt
European
Patent Office
Office européen
des brevets

(11) **EP 3 147 646 A1**

(12) **DEMANDE DE BREVET EUROPEEN**

(43) Date de publication:
**29.03.2017 Bulletin 2017/13**

(51) Int Cl.:
*G01N 15/14* [(2006.01)]    *G01N 21/41* [(2006.01)]
*G01N 21/552* [(2014.01)]    *G01N 21/77* [(2006.01)]
*G01N 15/10* [(2006.01)]

(21) Numéro de dépôt: **16190242.4**

(22) Date de dépôt: **22.09.2016**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **23.09.2015   FR 1558980**

(71) Demandeur: **Commissariat à l'énergie atomique
et aux énergies alternatives
75015 Paris (FR)**

(72) Inventeurs:
• **GLIERE, Alain**
  **38000 GRENOBLE (FR)**
• **BOUTAMI, Salim**
  **38100 GRENOBLE (FR)**
• **TCHELNOKOV, Alexei**
  **38240 MEYLAN (FR)**
• **VOZNYUK, Ivan**
  **38000 GRENOBLE (FR)**
• **ALLIER, Cédric**
  **38000 GRENOBLE (FR)**

(74) Mandataire: **GIE Innovation Competence Group
310, avenue Berthelot
69372 Lyon Cedex 08 (FR)**

(54) **DISPOSITIF D'IMAGERIE SANS LENTILLE ET PROCÉDÉ D'OBSERVATION ASSOCIÉ**

(57)     L'invention décrit un dispositif permettant l'observation d'un échantillon, comportant des particules, par exemple des particules biologiques, par imagerie sans lentille. L'échantillon est disposé contre un support, le support étant interposé entre une source de lumière et un capteur d'image. Le support comporte au moins une couche mince, s'étendant selon un plan de couche mince, structurée de façon à former un réseau de diffraction, apte à confiner une partie d'une onde lumineuse émise par la source de lumière, selon un plan parallèle audit plan de couche mince. Le dispositif ne comporte pas d'optique de grossissement entre le support et le capteur d'image.

**Fig. 1A**

**Description**

## DOMAINE TECHNIQUE

Le domaine technique de l'invention est l'observation d'un échantillon comportant des particules par imagerie sans lentille.

## ART ANTERIEUR

L'observation d'échantillons, et en particulier des échantillons biologiques, par imagerie sans lentille, connaît un développement important depuis ces dix dernières années. Cette technique permet d'observer un échantillon en le plaçant entre une source de lumière, produisant une onde lumineuse incidente, et un photodétecteur matriciel, sans disposer de système optique de grossissement entre l'échantillon et le photodétecteur. Ainsi, le photodétecteur collecte une image d'une onde lumineuse transmise par l'échantillon.

Cette image est formée de figures d'interférence entre l'onde lumineuse incidente émise par la source et transmise par l'échantillon, et des ondes de diffraction, résultant de la diffraction, par des particules présentes dans l'échantillon, de l'onde lumineuse incidente. Ces figures d'interférences sont parfois dénommées figures de diffraction, ou désignées par le terme anglais « diffraction pattern ».

Le document WO2008090330 décrit un dispositif permettant l'observation de particules biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, elle permet d'obtenir un champ d'observation nettement plus étendu que ne peut l'être celui d'un microscope. On comprend alors que les perspectives d'application liées à cette technologie sont importantes.

Le document US2012/0218379, postérieur au document précédent, reprend l'essentiel des enseignements de WO2008090330, tout en décrivant des algorithmes de reconstruction holographiques qui, appliqués à l'image formée sur le détecteur, permettent de reconstruire l'image de l'échantillon dans différents plans de reconstruction.

Le document WO2011045360 décrit le recours à une technologie similaire pour l'observation de particules contenues dans un film liquide recouvrant un support transparent. Chaque particule forme, à la surface d'un détecteur, une figure de diffraction, dont le contraste est amplifié lorsque l'épaisseur du film se réduit.

Ainsi, l'imagerie sans lentille permet d'observer un échantillon comportant des particules, sur la base de figures élémentaires formées par chaque particule sous l'effet d'une illumination par une onde incidente.

La demande de brevet US2008/0062418 décrit un substrat que lequel une couche de protéines est apte à se former. Le substrat peut être disposé selon une configuration en transmission, en étant disposé entre une source de lumière et un capteur d'image. En fonction de l'épaisseur de la couche, dite couche biomoléculaire, formée sur le substrat, les propriétés de transmission optique du substrat sont modifiées. Par exemple, une longueur d'onde de résonance, transmise par le substrat, peut être modifiée. Par ailleurs, les propriétés de transmission angulaire du substrat, c'est-à-dire la transmission par le substrat, de l'onde incidente émise par la source de lumière, en fonction d'un angle d'incidence, peuvent également varier en fonction de l'épaisseur de la couche biomoléculaire formée. En observant l'évolution de la transmission, par le substrat, de l'onde émise par la source de lumière, on peut déduire l'épaisseur de la couche déposée. Un tel substrat n'est pas apte à l'observation d'une particule individuelle placée sur le substrat, ou à proximité de ce dernier. Il ne permet pas de déterminer la position d'une telle particule à partir de l'image formée par le capteur d'image.

Compte tenu de l'intérêt suscité par la technologie de l'imagerie sans lentille, notamment pour des applications dans la santé, l'agroalimentaire ou l'environnement, les inventeurs ont cherché à améliorer ses performances, et en particulier la sensibilité et le contraste des figures formées par chaque particule.

## EXPOSE DE L'INVENTION

Un premier objet de l'invention est un dispositif pour réaliser une image d'un échantillon comportant :

- une source de lumière, apte à émettre une onde lumineuse, dite onde incidente, à une longueur d'onde, selon un axe de propagation, vers l'échantillon ;
- un capteur d'image ;
- un support, apte à recevoir l'échantillon, disposé entre la source de lumière et le capteur d'image ;

caractérisé en ce que :

- le support comprend une première couche mince, comprenant un premier matériau transparent à ladite longueur d'onde, d'un premier indice de réfraction, s'étendant selon un plan, dit plan de la couche mince ;
- ladite première couche mince comportant une pluralité d'inclusions, réalisées selon un deuxième matériau transparent à ladite longueur d'onde, d'un deuxième indice de réfraction ;
- la distance entre deux inclusions adjacentes étant inférieure à ladite longueur d'onde ;
- les dites inclusions définissant un premier réseau de diffraction dans ladite première couche mince, apte à confiner une partie de l'onde incidente selon un plan parallèle audit plan de couche mince;
- le dispositif ne comportant pas d'optique de grossissement entre le support et le capteur d'image.

Le premier réseau de diffraction peut être bidimensionnel.

Le premier réseau de diffraction peut notamment être configuré pour engendrer, à ladite longueur d'onde, une réflexion résonante de l'onde incidente, de façon à réfléchir une partie de ladite onde lumineuse incidente vers la source de lumière.

Selon un mode de réalisation, le support est délimité par une face inférieure et une face supérieure ; ladite première couche mince est alors apte à confiner une partie de la lumière incidente dans un guide d'onde délimité par l'une desdites faces, ou situé à une distance inférieure à ladite longueur d'onde par rapport à l'une desdites faces. La première couche mince peut être adjacente à l'une desdites faces, le premier réseau de diffraction étant un réseau résonant, apte à confiner une partie de l'onde incidente dans ledit plan de couche mince, ladite première couche mince formant alors ledit guide d'onde.

Selon ce mode de réalisation, le support peut comporter également un miroir de Bragg, disposé entre la source de lumière et ladite première couche mince, et formé par au moins deux couches adjacentes, s'étendant parallèlement à ladite couche mince, réalisées selon un troisième matériau d'un troisième indice et un quatrième matériau d'un quatrième indice, ledit troisième indice étant différent dudit quatrième indice. Le troisième matériau et le quatrième matériau peuvent respectivement être le premier matériau et le deuxième matériau constituant la couche mince. Le miroir de Bragg peut être placé à une distance de la première couche mince sensiblement égale à un multiple impair du quart de la longueur d'onde.

Selon un mode de réalisation, le support comporte une deuxième couche mince, s'étendant parallèlement à ladite première couche mince, de telle sorte que

- la deuxième couche mince comprend un cinquième matériau transparent à ladite longueur d'onde, d'un cinquième indice de réfraction, s'étendant selon ledit plan de la couche mince;
- ladite deuxième couche mince comporte une pluralité d'inclusions, réalisées en un sixième matériau transparent à ladite longueur d'onde, d'un sixième indice de réfraction;
- deux inclusions adjacentes de ladite deuxième couche mince sont distantes l'une de l'autre d'une distance inférieure à ladite longueur d'onde, de telle sorte que ces inclusions définissent un réseau de diffraction dans ladite deuxième couche mince, apte à confiner une partie de l'onde incidente dans ladite deuxième couche mince ;
- la distance entre la première couche mince et la deuxième couche mince est inférieure à ladite longueur d'onde.

Selon un mode de réalisation, le support comporte un guide d'onde planaire, s'étendant parallèlement à ladite première couche mince, cette dernière étant disposée entre ledit guide d'onde planaire et la source de lumière, le premier réseau de diffraction étant configuré pour engendrer un couplage optique avec le guide d'onde planaire, de telle sorte qu'une partie de l'onde incidente est couplée audit guide d'onde planaire. Le support peut alors être délimité par une face inférieure, disposée en vis-à-vis du capteur d'image. Le guide d'onde planaire peut alors être adjacent de ladite face inférieure ou situé à une distance, inférieure à ladite longueur d'onde, de ladite face inférieure

Quel que soit le mode de réalisation, chaque inclusion peut être cylindrique ou conique, de base circulaire ou polygonale, ou encore de forme hémisphérique. Le diamètre ou la diagonale de chaque inclusion est de préférence inférieure à ladite longueur d'onde. Selon une variante, chaque inclusion a une forme de bande, s'étendant selon une direction longitudinale dans le plan de couche mince, la largeur de ladite inclusion, selon une direction perpendiculaire à ladite direction longitudinale, étant inférieure à ladite longueur d'onde.

Quel que soit le mode de réalisation, le dispositif peut comporter l'une quelconque des caractéristiques ci-après, prises isolément ou en combinaison :

- l'épaisseur de la première couche mince, et de l'éventuelle deuxième couche mince, est inférieure à 1 $\mu$m ;
- le réseau défini par les inclusions dans la première couche mince est périodique ;
- les premiers matériaux et les deuxièmes matériaux de la couche mince sont choisis parmi les diélectriques ou les semi-conducteurs.

Un autre objet de l'invention est un procédé d'observation d'un échantillon, comprenant une particule, le procédé comportant les étapes suivantes :

- disposer l'échantillon au contact d'un support, ledit support étant disposé entre une source de lumière et un capteur d'image ;
- illuminer le support et l'échantillon à l'aide d'une onde lumineuse incidente, produite par la source de lumière, selon un axe de propagation ;
- le support, en particulier tel que décrit dans la description, comportant une première couche mince, s'étendant selon un plan de couche mince, comportant un premier réseau de diffraction engendrant un confinement d'une partie de l'onde incidente selon un plan parallèle audit plan de couche mince ;
- collecter, sur le capteur d'image, une onde de diffraction générée par ladite particule et acquérir une image représentative de cette onde de diffraction ;

Le support peut notamment réfléchir une partie de l'onde incidente et bloquer une transmission de l'onde incidente vers le capteur d'image. Le support peut être tel que décrit dans cette description.

Selon un mode de réalisation,

- le support est délimité par une face inférieure et une face supérieure, la face inférieure étant située en regard du capteur d'image;
- ladite première couche mince confine une partie de la lumière incidente dans un guide d'onde délimité par l'une desdites faces, ou situé à une distance inférieure à ladite longueur d'onde d'une desdites faces, pour former un faisceau dit confiné se propageant dans ledit guide d'onde ;
- l'échantillon est placé au contact de la face délimitant ledit guide d'onde.

Le guide d'onde peut être formé par ladite première couche mince.

Le support peut comprendre une deuxième couche mince, s'étendant parallèlement à ladite première couche mince, et formant un deuxième réseau de diffraction, apte à confiner une partie de l'onde incidente dans ladite deuxième couche mince, la première et la deuxième couche mince étant distantes l'une de l'autre d'une distance inférieure à ladite longueur d'onde. Selon un mode de réalisation, le guide d'onde est un guide d'onde planaire, adjacent de la face inférieure du support, ou situé à une distance inférieure à ladite longueur d'onde de ce dernier, la première couche mince agissant pour coupler une partie de l'onde incidente audit guide d'onde planaire. La distance entre le réseau de diffraction et la couche mince est de préférence non nulle et inférieure à la longueur d'onde.

Quel que soit le mode de réalisation, la particule, contenue dans l'échantillon, peut former une onde de diffraction à partir du faisceau confiné dans ledit guide d'onde, une partie de cette onde de diffraction étant détectée par ledit capteur d'image. Cela permet une localisation de la particule dans le plan du capteur d'image, et éventuellement une estimation de sa dimension. Un autre objet de l'invention est une utilisation du dispositif tel que précédemment décrit pour l'observation d'échantillons biologiques.

L'invention sera mieux comprise à la lecture de la description qui va suivre, comprenant des exemples non limitatifs et se référant aux figures présentées ci-dessous.

## FIGURES

La figure 1A représente un premier mode de réalisation de l'invention.
La figure 1B est une vue en coupe d'un exemple de réseau de diffraction.
La figure 2A représente le résultat de simulations mettant en évidence l'évolution de la réflectance en fonction de la longueur d'onde, selon le premier mode de réalisation. La figure 2B représente le résultat de simulations mettant en évidence l'évolution de l'intensité du champ électrique à une interface du réseau de diffraction et du support, en fonction de la longueur d'onde, selon le mode de réalisation représenté sur la figure 1A.

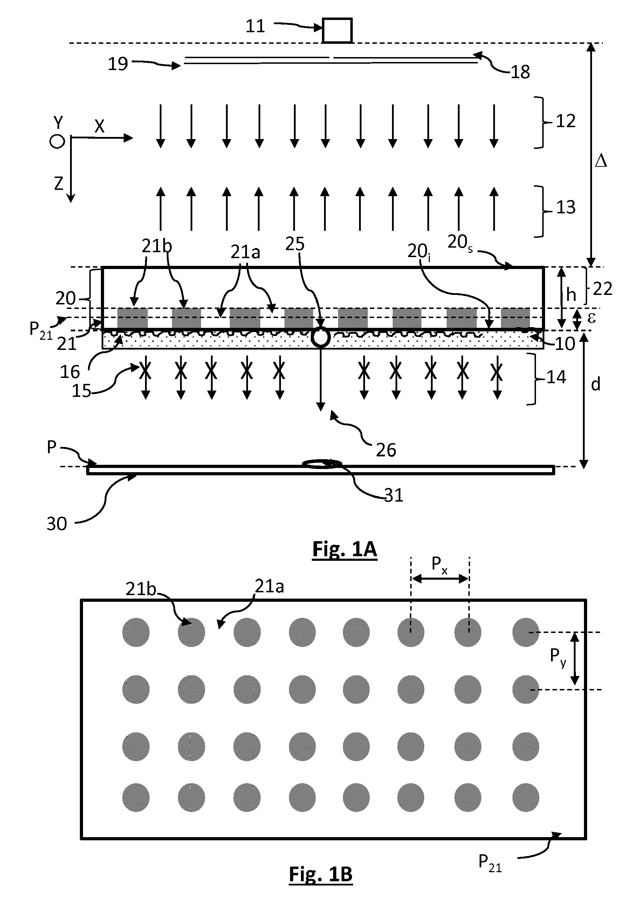

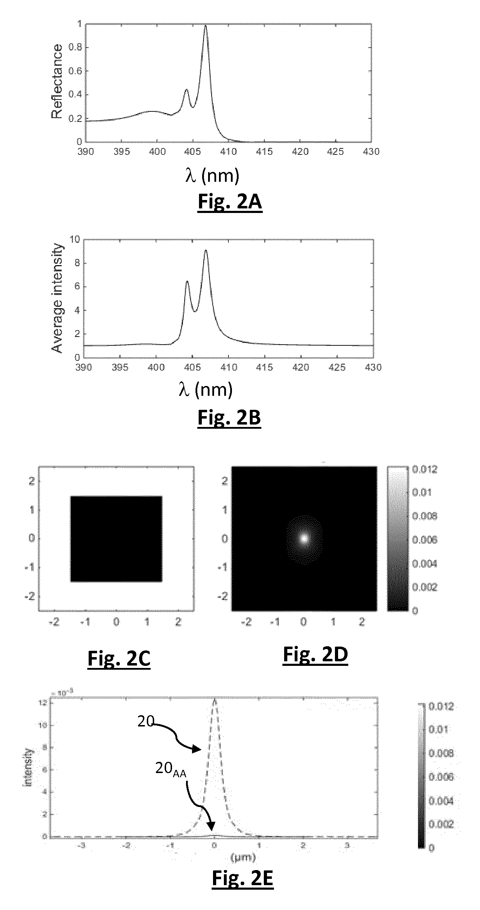

Les figures 2C et 2D représentent respectivement une figure, dite figure de diffraction, formée sur un capteur d'image, par une onde de diffraction générée par une particule de diamètre 100nm placée contre le support, selon un mode de réalisation de l'art antérieur et selon le mode de réalisation représenté sur la figure 1A. La figure 2E représente un profil simulé de l'intensité d'une figure de diffraction formée, à une longueur d'onde de résonance du réseau de diffraction, par une particule de diamètre 100 nm respectivement selon une configuration de l'art antérieur et selon le premier mode de réalisation.
La figure 2F représente l'évolution, en fonction du diamètre d'une particule observée, d'un ratio entre l'intensité d'une figure de diffraction, à la longueur d'onde de résonance du réseau de diffraction, selon le premier mode de réalisation, sur l'intensité d'une figure de diffraction selon une configuration de l'art antérieur.

La figure 3 représente un deuxième mode de réalisation de l'invention.

La figure 4 représente un troisième mode de réalisation de l'invention.

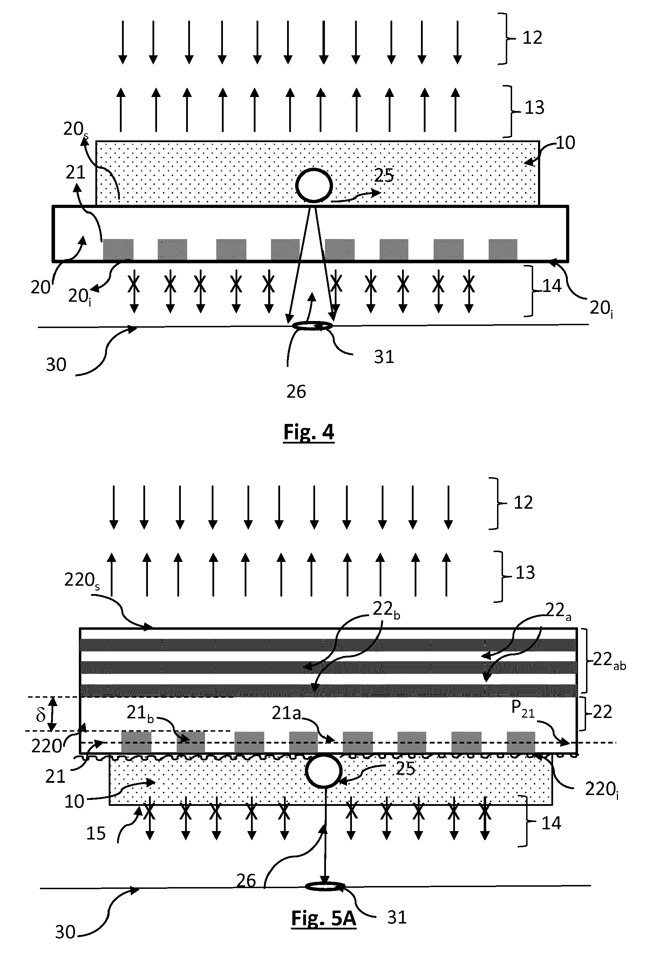

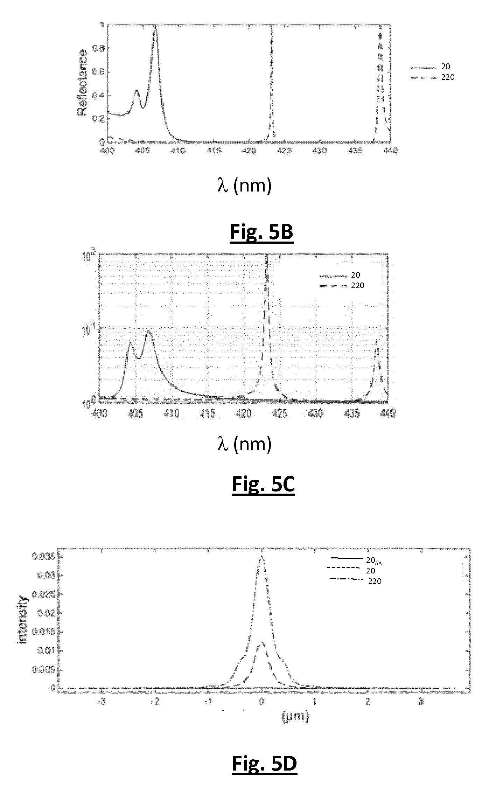

La figure 5A représente un quatrième mode de réalisation de l'invention. La figure 5B montre une comparaison de l'évolution de la réflectance, en fonction de la longueur d'onde, selon le premier mode de réalisation et selon le quatrième mode de réalisation. La figure 5C montre une comparaison de l'intensité du champ électrique à une interface du réseau de diffraction et du support, en fonction de la longueur d'onde, respectivement selon le premier mode de réalisation et selon le quatrième mode de réalisation. La figure 5D montre un profil d'une figure de diffraction formée par une particule sur un capteur d'image, à la longueur d'onde de résonance du réseau de diffraction, respectivement selon l'art antérieur, selon le premier mode de réalisation et selon le quatrième mode de réalisation.

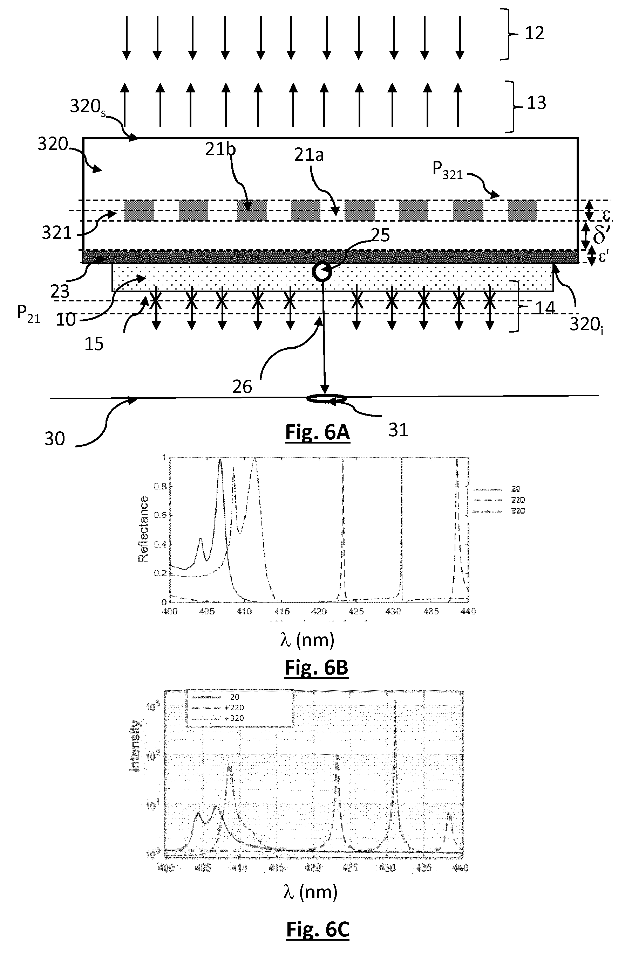

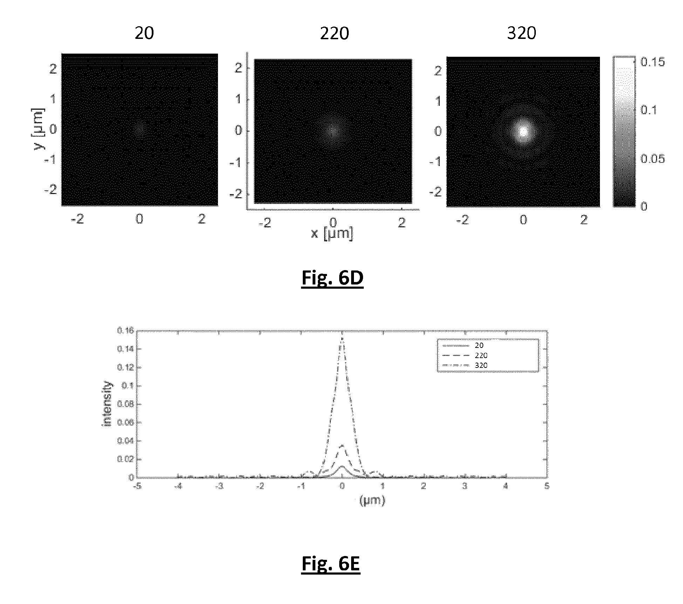

La figure 6A représente un cinquième mode de réalisation de l'invention. La figure 6B représente une comparaison de l'évolution de la réflectance, en fonction de la longueur d'onde, selon le premier, le quatrième et le cinquième mode de réalisation. La figure 6C représente une comparaison de l'intensité du champ électrique à une interface du réseau de diffraction et du support, en fonction de la longueur d'onde, respectivement selon le premier, le quatrième et le cinquième mode de réalisation. La figure 6D représente une comparaison de l'image formée sur le capteur d'image par une particule diffractante placée contre le support, respectivement selon le premier, le quatrième et le cinquième mode de réalisation. La figure 6E montre un profil d'intensité d'une figure de diffraction dans le plan de détection du capteur d'image, à la longueur d'onde de résonance du réseau de diffraction, respectivement selon le premier, le quatrième et le cinquième mode de réalisation.

Les figures 7A et 7B représentent une simulation de la distribution spatiale de l'intensité du champ électrique sur la face inférieure du support respectivement selon le quatrième mode de réalisation et le cinquième mode de réalisation.

La figure 8A représente les résultats de simulations permettant la détermination de la longueur d'onde de résonance du réseau de diffraction décrit dans le cinquième mode de réalisation en fonction l'épaisseur du guide d'onde planaire et de la distance le séparant du réseau de diffraction. La figure 8B représente les résultats de simulations permettant une estimation de l'intensité du champ électrique à une interface du réseau de diffraction et du support selon le cinquième mode de réalisation, en fonction de son épaisseur et de la distance le séparant du réseau de diffraction.

La figure 9 représente un sixième mode de réalisation.

La figure 10A représente un septième mode de réalisation, comprenant deux réseaux de diffraction. La figure 10B représente la réflectance, en fonction de la longueur d'onde, de chaque réseau pris isolément ainsi que de la combinaison des deux réseaux. La figure 10C représente l'intensité du champ électrique, en fonction de la longueur d'onde, dans chaque réseau pris isolément, ainsi que l'intensité du champ électrique, en fonction de la longueur d'onde, à une interface du réseau de diffraction située à proximité de la face inférieure délimitant le support, et du support.

La figure 11A représente une image d'un réseau de diffraction bidimensionnel. La figure 11B montre des mesures de la réflectance du réseau de diffraction de la figure 11A, en fonction de la longueur d'onde.

Dans ces figures, les mêmes références sont utilisées pour désigner les mêmes éléments.

## EXPOSE DE MODES DE REALISATION PARTICULIERS

La figure 1 représente un premier mode de réalisation de l'invention. Une source de lumière 11 produit une onde lumineuse incidente 12 en direction d'un support 20, ce dernier étant disposé entre la source de lumière 11 et un capteur d'image 30.

L'échantillon 10 à analyser est placé contre un support 20. Le support 20 est délimité par une face supérieure $20_s$, disposée face à la source de lumière 11, et une face inférieure $20_i$, disposée en vis-à-vis du capteur d'image 30.

Dans cet exemple, l'échantillon 10 est un échantillon liquide prenant la forme d'un film fin, comportant des particules 25 et s'étendant contre la face inférieure $20_i$ du support. D'une façon générale, une particule a une taille avantageusement inférieure à 1 mm, voire inférieure à 500 $\mu$m, et de préférence une taille comprise entre 5 nm et 100 $\mu$m. Il peut notamment s'agir d'une particule biologique, de type bactérie, ou autre microorganisme, virus, cellule, par exemple une cellule sanguine, ou une microbille.

La source de lumière 11 est de préférence ponctuelle. Elle peut notamment comprendre un diaphragme 18, ou filtre spatial. L'ouverture du diaphragme est typiquement comprise entre 5 $\mu$m et 1mm, de préférence entre 50 $\mu$m et 500 $\mu$m, par exemple 150 $\mu$m. Le diaphragme peut être remplacé par une fibre optique, dont une première extrémité est placée face la source de lumière 11 et dont une deuxième extrémité est placée en regard de la face supérieure $20_s$ du support. La source de lumière est par exemple une source laser, telle une diode laser ou une diode électroluminescente. Quel que soit le mode de réalisation, la bande spectrale d'émission de la source de lumière 11 est de préférence ajustée à une longueur d'onde de résonance d'un réseau de diffraction formé dans le support, décrite par la suite. La bande spectrale d'émission peut se situer dans le domaine visible, proche UV (> 200 nm), proche infra-rouge (< 3 $\mu$m)

ou moyen infra-rouge (entre 3 et 10 à 12 $\mu$m). Un filtre passe bande 19 peut être disposé entre la source de lumière et le support, de façon à ajuster la bande spectrale d'émission de la source de lumière, en particulier par rapport à la longueur d'onde de résonance précédemment évoquée. L'onde lumineuse incidente 12 produite par la source de lumière se propage selon un axe de propagation Z. La source de lumière peut être accordable en longueur d'onde. Il peut s'agir d'une source laser accordable. Il peut s'agir d'un laser QCL (acronyme de Quantum Cascade Laser, signifiant laser à cascade quantique), et en particulier d'un laser à cavité externe. La largeur de la bande spectrale d'émission de la source de lumière est de préférence inférieure à 50 nm, voire à 10 nm, voire à 5 nm.

La distance $\Delta$ entre la source de lumière et l'échantillon est de préférence supérieure à 1 cm et de préférence comprise entre 2 et 30 cm. Avantageusement, la source de lumière, vue par l'échantillon, est considérée comme ponctuelle. Cela signifie que son diamètre (ou sa diagonale) est préférentiellement inférieure au dixième, mieux au centième de la distance entre l'échantillon et la source de lumière. Ainsi, l'onde lumineuse parvient au support sous la forme d'une onde plane, ou pouvant être considérée comme telle, l'incidence étant, dans cet exemple, normale.

Le capteur d'image 30 est apte à former une image selon un plan de détection P. Dans l'exemple représenté, la bande spectrale d'émission de la source de lumière se situe dans le domaine visible. Le capteur d'image peut alors être un photodétecteur matriciel comportant une matrice de pixels, de type CCD ou CMOS. Le plan de détection P s'étend dans cet exemple perpendiculairement à l'axe de propagation Z de l'onde lumineuse incidente 12. Le capteur d'image peut comprendre un système de renvoi d'image de type miroir vers une matrice de pixels, auquel cas le plan de détection correspond au plan selon lequel s'étend le système de renvoi d'image. D'une façon générale, le plan de détection P correspond au plan dans lequel une image est formée.

La distance d entre l'échantillon 10 et la matrice de pixels du capteur d'image est, dans cet exemple, égale à 300 $\mu$m. D'une manière générale, et cela quel que soit le mode de réalisation, la distance d entre l'échantillon et les pixels du capteur d'image est préférentiellement comprise entre 50 $\mu$m et 2 cm, de préférence comprise entre 100 $\mu$m et 2 mm.

On remarque l'absence d'optique de grossissement entre le capteur d'image 30 et l'échantillon 10. Cela n'empêche pas la présence éventuelle de microlentilles de focalisation au niveau de chaque pixel du capteur d'image 30, ces dernières n'ayant pas de fonction de grandissement de l'image.

Le support 20 comporte une partie 22 homogène, transparente au rayonnement incident, d'épaisseur de quelques centaines de $\mu$m à quelques mm. Dans l'exemple réalisé, l'épaisseur de cette partie homogène est de 725 $\mu$m. Le support comporte également une couche mince 21 nano-structurée. Le terme couche mince désigne une couche dont l'épaisseur $\varepsilon$ est inférieure à 5 $\mu$m, voire à 1 $\mu$m. L'épaisseur $\varepsilon$ peut notamment être définie par rapport à une longueur d'onde $\lambda$ de la bande spectrale d'émission, par exemple la longueur d'onde centrale de la bande spectrale d'émission. De préférence, $\varepsilon \leq \lambda$, voire $\varepsilon \leq \lambda/2$. La couche mince 21 est réalisée selon un premier matériau diélectrique $21_a$, transparent à tout ou partie de la bande spectrale d'émission, ce matériau ayant un premier indice de réfraction $n_1$. La couche mince comporte des inclusions, réalisées selon un deuxième matériau diélectrique $21_b$, transparent à tout ou partie de la bande spectrale d'émission, d'un deuxième indice de réfraction $n_2$. L'écart entre le premier indice et le deuxième indice est de préférence supérieur à 0,1 voire 0,25.

Lorsque la bande spectrale d'émission se situe dans le proche UV, le visible ou le proche infra-rouge, les premier et deuxième matériaux $21_a$ et $21_b$ sont de préférence des matériaux diélectriques, transparents dans tout ou partie ladite bande spectrale d'émission. Lorsque la bande spectrale d'émission se situe dans le proche infra-rouge ou le moyen infra-rouge, les premier et deuxième matériaux $21_a$ et $21_b$ peuvent être des matériaux semi-conducteurs (par exemple le silicium amorphe ou le germanium) ou diélectriques (par exemple le sulfure de zinc) transparents dans au moins une partie de la bande spectrale d'émission. D'une façon générale, les premier et deuxième matériaux $21_a$ et $21_b$ formant le réseau de diffraction sont transparents dans tout ou partie de la bande spectrale d'émission de la source de lumière, et plus particulièrement à la longueur d'onde de résonnance décrite ci-après.

Dans le cas présent, où la bande spectrale d'émission se situe dans le spectre visible, le premier matériau est de l'oxyde de silicium, ou silice, ($n_1 \approx 1,5$) et le deuxième matériau est du nitrure de silicium ($n_2 \ll 2$).

La première couche mince s'étend selon un plan $P_{21}$, dit plan de couche mince, qui est dans cet exemple perpendiculaire à l'axe de propagation de l'onde incidente 12. Chaque inclusion $21_b$ prend la forme d'un cylindre, dont la base, dans le plan de la couche mince, est circulaire ou polygonale, le cylindre s'étendant parallèlement à l'axe de propagation de l'onde incidente 12. Chaque inclusion $21_b$ peut également prendre la forme d'un cône ou un tronc conique, de base circulaire ou polygonale, ou avoir une forme hémisphérique. Quelle que soit la forme retenue, la dimension de chaque inclusion est micrométrique, c'est-à-dire que selon le plan de la couche mince, la plus grande dimension de chaque inclusion est inférieure à la longueur d'onde. On parle de dimension « sub-longueur d'onde » Les inclusions sont réparties selon un agencement matriciel. Elles définissent un réseau, dit réseau de diffraction dit bidimensionnel, s'étendant dans la couche mince 21. Par réseau de diffraction bidimensionnel, on entend un réseau comportant des inclusions distribuées périodiquement selon deux directions X et Y, notamment orthogonales, du plan de couche mince $P_{21}$. Chaque inclusion est séparée d'une autre inclusion adjacente dans les deux directions.

Dans la description relative aux premier, deuxième, troisième, quatrième, cinquième et sixième modes de réalisation, le support comprend une seule couche mine 21, définissant un réseau de diffraction. Cette couche mince peut également être désignée par le terme première couche mince, définissant un premier réseau de diffraction. Le septième mode de réalisation, comporte un support comprenant deux couches minces distinctes, parallèles l'une à l'autre, respectivement désignées par le terme « première couche mince » et le terme « deuxième couche mince ».

La figure 1B représente une coupe de la couche mince 21, selon le plan de couche mince $P_{21}$. La couche mince 21 est constituée d'oxyde de silicium (silice), et comporte des inclusions de nitrure de silicium définissant un motif périodique. Chaque inclusion a la forme d'un cylindre de base circulaire et de diamètre égal à 132 nm. La distance centre à centre de chaque inclusion est de 264 nm, la période du réseau étant de 264 nm. L'épaisseur $\varepsilon$ de la couche mince est de 130 nm. Aussi, dans cet exemple, la périodicité $P_X$ et $P_Y$ respectivement selon les deux axes X et Y du plan de la couche mince $P_{21}$ est identique. Du fait de la périodicité selon deux axes du même plan, le réseau de diffraction est dit bidimensionnel. Selon les deux axes, la période est non nulle et généralement inférieure à la longueur d'onde.

D'une façon générale, le support 20 comporte une couche mince diélectrique 21, comportant des inclusions de dimensions préférentiellement sub-longueur d'onde, définissant un réseau de diffraction périodique. Le réseau périodique est généré à partir d'une maille, dite maille de base, comprenant une ou plusieurs inclusions. Chaque maille est répétée périodiquement suivant un ou deux vecteurs de translation, dans le plan de la couche mince. Une même maille peut contenir des inclusions de formes différentes. On parle alors de réseau pseudo-périodique.

La couche mince 21 constitue un réseau de diffraction résonant, parfois dénommé cristal photonique, présentant une longueur d'onde de résonance, à laquelle les propriétés de transmission et de réflexion de la lumière peuvent être déterminées à l'aide de simulations effectuées par des codes de calcul. En effet, les propriétés de propagation de la lumière dans les réseaux de diffraction découlent de leur arrangement périodique spécifique et sont aisément modélisées, par l'homme du métier, sur la base des équations spatio-temporelles de Maxwell. Dans la suite de cette description, les modélisations sont réalisées à l'aide du logiciel Comsol, mettant en oeuvre une méthode de type FEM « Finite Element Method».

Par réseau de diffraction, on entend une structure, et, dans cet exemple, une structure diélectrique, dont l'indice varie périodiquement à l'échelle de la longueur d'onde, dans une ou plusieurs directions. L'invention tire alors profit du développement de techniques de micro structuration des matériaux diélectriques, permettant un contrôle de l'interaction des ondes électromagnétiques dans des structures tridimensionnelles basées sur l'agencement de matériaux de différents indices. Grâce à la précision nanométrique des procédés de microfabrication, on peut à présent réaliser des réseaux de diffraction correspondant à une échelle de structuration de la matière voisine du quart ou de la demi-longueur d'onde, ce qui les rend compatibles avec des applications en optique.

Dans le cas présent, à la longueur d'onde de résonance, le réseau de diffraction formé par la couche 21, transparent aux autres longueurs d'onde, ne transmet pas la lumière. A la longueur d'onde de résonance, le réseau formé dans la couche mince permet un confinement d'une partie de l'onde incidente 12 selon le plan de la couche mince $P_{21}$, formant alors un faisceau confiné.

Le taux de couplage $\Gamma$ des photons de l'onde incidente 12 dans le réseau peut atteindre par exemple 10%. Par taux de couplage, on entend un ratio entre un nombre de photons couplés et un nombre de photons incidents. Dans ce cas, 10% du flux incident est couplé au réseau résonant. Le taux de découplage du réseau, où taux de fuite, a la même valeur que le taux de couplage $\Gamma$, en l'occurrence 10%. Lors de l'illumination du support par la source, à la longueur d'onde de résonance du réseau de diffraction 21, l'intensité du faisceau électromagnétique confiné dans le réseau de diffraction augmente quasi-instantanément, jusqu'à dépasser 10 fois l'intensité du rayonnement incident. Les photons couplés au réseau de diffraction compensent les pertes issues du découplage. Ces pertes prennent la forme d'une onde 13 se propageant vers la source de lumière, et d'une onde 15 se propageant vers le capteur, les ondes 13 et 15 se propageant parallèlement à l'axe de propagation de la lumière incidente Z. L'intensité de l'onde 13 réfléchie par le réseau dans un sens opposé au sens de propagation Z est équivalente à l'intensité de l'onde incidente 12. Par ailleurs, l'onde 15 formée par les pertes du réseau selon le sens de propagation Z est en opposition de phase avec une onde 14 transmise par le support, cette dernière étant formée par la partie de l'onde lumineuse incidente 12 non couplée au réseau. Il se forme alors des interférences destructives, bloquant l'exposition du capteur d'image 30. Ces interférences destructives sont symbolisées, sur la figure 1A, par le symbole X. Par conséquent le réseau agit comme un miroir résonant, avec un coefficient de réflexion R, ou réflectance, proche de 1. On parle de réflexion résonante. Dans ces conditions, le capteur d'image 30 se trouve dans une configuration dite en fond noir, car il n'est pas exposé à une lumière provenant du support 20. En réalité, compte tenu d'imperfections, le capteur d'image est exposé à un fond sombre (faible niveau de gris) homogène.

La couche mince 21 est adjacente de la face inférieure $20_i$ du support 20. Dans cette description, le terme adjacent doit être compris comme délimité par ou distant d'une distance inférieure à 10 $\mu$m, et notamment inférieure à la longueur d'onde Lorsqu'une particule 25 de l'échantillon 10 se trouve au contact de la face inférieure $20_i$, ou à une distance suffisamment faible de cette dernière, elle perturbe le réseau de diffraction, ce dernier transmettant alors la lumière. Il en résulte la formation d'une onde de diffraction 26 se propageant vers le capteur d'image 30. Ce dernier étant placé en champ sombre, le contraste formé par l'onde de diffraction 26, au niveau du plan de détection, est élevé.

On recueille alors une figure de diffraction 31 permettant de détecter la particule, et éventuellement de la localiser, dans le plan de détection, voire de l'identifier. Par distance suffisamment faible, on entend une distance de préférence inférieure à la longueur d'onde, ou encore de préférence inférieure à la moitié ou au quart de la longueur d'onde. Plus la particule est proche de la couche mince 21, plus l'amplitude de l'onde de diffraction est élevée. Typiquement, la distance entre la particule et la couche mince est de préférence inférieure à 200 nm, de préférence inférieure 100 nm, et encore de préférence inférieure à 50 nm.

De plus, l'intensité élevée du champ électromagnétique confiné dans le réseau résonant de la couche mince 21 accroît d'autant plus l'intensité de l'onde 26 diffractée par la particule 25. L'intensité de l'onde diffractée 26 est également renforcée par un champ évanescent 16 se formant au niveau de la face inférieure $20_i$ ou de la couche mince 21.

Ainsi, chaque particule 25 se trouvant au contact de la face inférieure $20_i$ devient une particule diffractante, apte à engendrer la formation d'une figure de diffraction sur le capteur d'image. Le réseau de diffraction formé dans la couche mince 21 permet l'obtention, dans le plan de détection, d'une figure de diffraction dont le contraste est élevé, par les effets combinés de la réflexion de l'onde incidente 12 et de l'intensité amplifiée du champ électromagnétique dans le réseau résonant. Il en résulte une sensibilité élevée du dispositif. Cet effet de diffraction est obtenu lorsque la particule est placée selon une configuration dite en champ proche, c'est-à-dire à une distance sub-longueur d'onde de la face inférieure $20_i$.

La figure 2A est le résultat d'une simulation représentant, pour la structure schématisée sur les figures 1A et 1B, la réflectance en fonction de la longueur d'onde. La réflectance correspond à un ratio entre l'intensité de l'onde réfléchie 13 sur l'intensité de l'onde incidente 12. Il apparaît qu'à la longueur d'onde de résonance de 405 nm, la réflectance est proche de 1. La figure 2B est le résultat d'une simulation représentant, pour la structure schématisée sur les figures 1A et 1B, l'intensité du champ électrique à l'interface entre la couche mince 21 et la face inférieure $20_i$ du support, en fonction de la longueur d'onde. On observe qu'à la longueur d'onde de résonnance, l'intensité du champ électromagnétique confiné dans le réseau augmente d'un facteur supérieur à 10 par rapport aux longueurs d'ondes non résonantes.

Cette figure permet d'aborder le facteur de qualité Q d'une telle structure, qui est le ratio de la largeur du pic de résonance ($\Delta\lambda$) sur la longueur d'onde centrale du pic de résonance. Plus le facteur de qualité est élevé, plus la résonance est marquée, mais plus la sélectivité spectrale du réseau est fine.

La figure 2C représente une simulation d'une figure de diffraction formée, dans le plan de détection du capteur d'image, par une onde de diffraction générée par une particule de diamètre 100 nm exposée à l'onde incidente 12, en utilisant un support de l'art antérieur $20_{AA}$, dépourvu de réseau de diffraction. Cela représente une configuration de l'art antérieur. La figure 2D représente une simulation d'une figure de diffraction formée, par une particule identique, disposée contre la face inférieure du support 20. Dans les deux simulations, la particule, est une sphère de diamètre 100 nm et d'indice 1.5. La distance entre le capteur d'image et la bille s'élève à 300 $\mu$m.

La figure 2E représente un profil de chaque figure de diffraction simulée dans les figures 2C et 2D. On observe que l'intensité de l'onde de diffraction est significativement augmentée du fait de la présence du réseau résonant formé dans la couche mince 21. Par ailleurs, le fait que selon l'invention, le capteur d'image soit placé en fond sombre, conduit à une augmentation du rapport signal sur bruit de la tache de diffraction 31 formée par l'onde diffractée 26 sur l'image acquise par le capteur d'image 30.

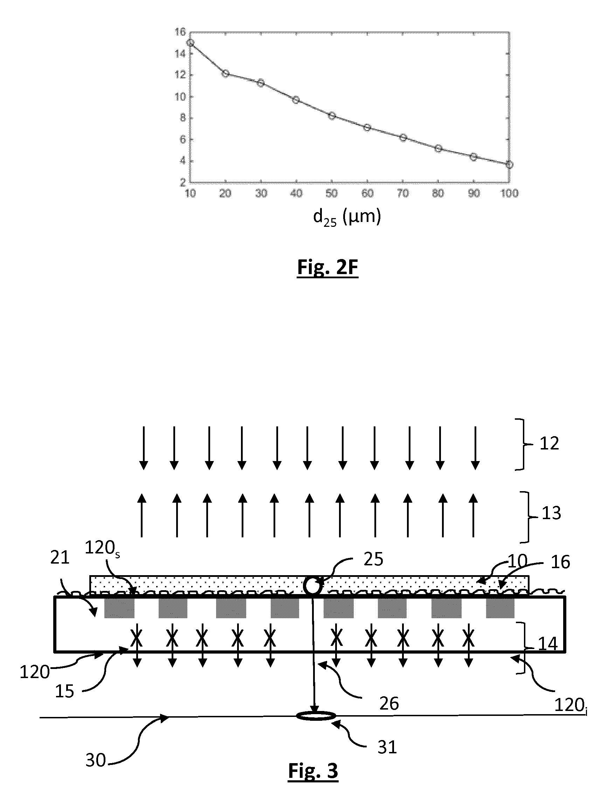

Le renforcement de l'intensité de l'onde diffractée 26 est d'autant plus important que les dimensions de la particule 25 sont faibles. Cet effet est illustré sur la figure 2F, représentant, en fonction du diamètre de la particule diffractante $d_{25}$, l'évolution d'un ratio entre l'intensité maximale d'une figure de diffraction obtenue selon le premier mode de réalisation sur l'intensité maximale d'une figure de diffraction obtenue selon l'art antérieur. On observe que le gain en intensité apporté par l'invention est d'autant plus élevé que les dimensions de la particule observée sont faibles.

La figure 3 représente un deuxième mode de réalisation, représentant un support 120 dans lequel la couche mince 21, identique à celle décrit dans le mode de réalisation précédent, est disposée non pas de façon adjacente de la face inférieure $120_i$, comme dans l'exemple précédemment décrit, mais de façon adjacente de la face supérieure $120_s$. Le réseau formé dans la couche mince 21 permet toujours une réflexion résonante à une longueur d'onde de résonance, selon les principes de fonctionnement décrit en relation avec le mode de réalisation précédent. L'onde 14 non couplée au réseau subit une interférence destructive avec le rayonnement 15 découplé de ce réseau. Une particule 25 disposée au contact de la face supérieure $120_s$, ou à une distance suffisamment faible de cette dernière, typiquement une distance sub-longueur d'onde, devient une particule diffractante et génère une onde de diffraction 26 se propageant jusqu'au plan de détection P du capteur d'image 30. Elle forme alors une figure de diffraction 31.

Selon ce mode de réalisation, lorsque la particule 25 est placée à distance de la face supérieure 120s, la distance étant supérieure à la longueur d'onde, elle est toujours apte à produire une onde de diffraction du fait de son illumination par l'onde incidente 12. Cependant, selon cette configuration, l'intensité de l'onde de diffraction 26 n'est pas exacerbée par le champ électromagnétique confiné dans le réseau de diffraction formé dans la couche mince 21, du fait que la particule ne se trouve pas en champ proche.

Ainsi, dans ce mode de réalisation, la particule peut être placée à distance ou au contact du support. Dans ce dernier cas, l'onde de diffraction 26 est amplifiée par champ électromagnétique confiné dans la couche mince 21.

La figure 4 représente un troisième mode de réalisation de l'invention, dans lequel une particule est déposée entre la face supérieure $20_s$ du support 20, décrit dans le premier mode de réalisation, tandis que la couche mince 21 est adjacente de la face inférieure $20_i$ de ce support. A l'instar des modes de réalisation précédents, le réseau formé dans la couche mince 21 permet toujours une réflexion résonante de l'onde incidente 12, en émettant une onde réfléchie 13 selon une réflectance voisine de 1. La particule 25 est exposée à l'onde incidente 12 et forme une onde de diffraction 26, dont l'angle d'incidence avec la couche mince 21 est suffisant pour pouvoir être transmis jusqu'au capteur d'image 30. Selon ce mode de réalisation, le capteur d'image demeure dans une configuration en fond noir, du fait de la réflexion de l'onde incidente 12 par le réseau de la couche mince. Par contre, l'intensité de l'onde de diffraction 26 n'est pas augmentée par le champ électromagnétique confiné dans ce réseau.

La figure 5A représente un quatrième mode de réalisation reprenant les mêmes éléments que celui représenté sur la figure 1. Selon ce mode de réalisation, le support 220 comporte, en outre, un miroir de Bragg $22_{ab}$, disposé entre la couche mince 21, précédemment décrite. Il s'étend entre une face supérieure $220_s$, disposée en regard de la source de lumière 11, et une face inférieure $220_i$, placée en face du capteur d'image 30. Un miroir de Bragg $22_{ab}$ est formé d'un empilement périodique de couches diélectriques, ou semi-conductrices, dont l'épaisseur optique est un multiple impair du quart de la longueur d'onde. Une période de l'empilement est en particulier constituée de deux couches, réalisées respectivement selon un troisième matériau $22_a$ d'un troisième indice de réfraction $n_3$ et un quatrième matériau $22_b$, d'un quatrième indice de réfraction $n_4$, lesdits troisième indice et quatrième indice étant différents. L'écart entre le troisième indice et le quatrième indice est de préférence supérieur à 0,25. Plus le nombre de périodes est important, ou plus l'écart entre les indices de deux couches successives est important, plus la réflectance du miroir de Bragg $22_{ab}$ est élevée. De même que pour les premier et deuxième matériaux, les troisième et quatrième matériaux sont transparents à tout ou partie de la bande spectrale d'émission selon laquelle l'onde 12 est émise, et en particulier transparents à la longueur d'onde de résonance du réseau de diffraction formé dans la couche mince 21.

Un premier avantage de ce mode de réalisation est qu'un miroir de Bragg $22_{ab}$ permet de réfléchir l'onde incidente 12 selon une large bande spectrale, c'est-à-dire selon des longueurs d'onde en deçà et au-delà de la bande spectrale de résonance du réseau de diffraction de la couche mince 21. Ainsi, ce mode de réalisation permet l'utilisation d'une source de lumière dont la bande spectrale d'émission est plus large, en comparaison avec les modes de réalisation précédemment décrits.

Un autre avantage de ce mode de réalisation est la formation d'interférences destructives entre le mode rayonné vertical se propageant vers la source. Cela augmente la durée de confinement des photons dans le réseau. Cela augmente également l'intensité du champ électromagnétique confiné dans le réseau, entraînant une augmentation de l'intensité de l'onde de diffraction 26 formée par une particule 25 placée en champ proche, c'est-à-dire à une distance sub longueur d'onde du réseau de diffraction. La sensibilité du dispositif est donc améliorée.

Il est préférable que la distance $\delta$ entre la couche mince 21 et le miroir de Bragg soit un multiple impair de $\lambda/4$. Autrement dit, une condition optimale est $\delta \approx k\,\lambda/4$, k étant un entier positif impair. En effet, entre le miroir de Bragg et le réseau résonant 21, l'onde lumineuse est une onde stationnaire, dont l'intensité varie entre une valeur seuil, proche de 0, et une valeur maximale pouvant atteindre 4 fois l'intensité de l'onde incidente 12, les minimas successifs étant espacés d'une longueur d'onde $\lambda$, de même que les maximas. Plus l'intensité incidente, au niveau du réseau résonant, est faible, plus le taux de couplage $\Gamma$ l'est également, et par conséquent, plus les photons se propageant dans le réseau résonant se découplent difficilement. Aussi, les inventeurs estiment qu'il est préférable de disposer la couche mince 21 au niveau d'un minima d'intensité, parfois appelé noeud, de l'onde incidente 12. Par conséquent, l'intensité du champ électromagnétique confinée dans le réseau est importante, et notamment plus importante que dans les modes de réalisation précédemment décrits. Il en résulte une augmentation de l'intensité de l'onde de diffraction 26 générée par une particule 25, ce qui est confirmé par les résultats de simulations représentés sur la figure 5C. Dans les simulations présentées sur les figures 5B à 5D, on a considéré que k est un entier impair.

k peut être un entier pair auquel cas le taux de couplage $\Gamma$ est plus important. Cependant, le découplage est également plus important, ce qui ne permet pas d'obtenir une intensité du faisceau confiné aussi élevée que lorsque k est impair.

Lorsque k est un entier pair, le facteur de qualité du réseau résonant diminue, ce qui s'accompagne d'une tolérance spectrale du réseau plus importante.

La figure 5B représente l'évolution de la réflectance du réseau en fonction de la longueur d'onde dans deux configurations : une première configuration en utilisant le support 20 décrit en lien avec le premier mode de réalisation représenté sur les figures 1A et 1B, et une deuxième configuration en utilisant le support 220 correspondant au quatrième mode de réalisation, représenté sur la figure 5A, les troisième et quatrième matériaux étant respectivement identiques aux premier et deuxième matériaux formant la couche mince 21. La longueur d'onde de résonance évolue entre 405 nm (première configuration) et 423 nm (deuxième configuration). On observe également une augmentation du facteur de qualité Q dans le quatrième mode de réalisation. La sensibilité de détection est donc améliorée.

Par ailleurs, bien que la réflectance du réseau soit optimale à la longueur d'onde de résonnance, le recours à un miroir de Bragg élargit la bande spectrale selon laquelle l'onde lumineuse incidente 12 est réfléchie, en particulier lorsque le nombre de couches augmente. Il devient alors possible d'utiliser une source de lumière dont la longueur d'onde peut être décalée par rapport à la longueur d'onde de résonance.

La figure 5C représente l'évolution de l'intensité du champ électrique, à l'interface entre la couche mince 21 et la face inférieure du support, selon ces deux configurations (support 20 et support 220), cette intensité étant représentative de l'intensité du champ électromagnétique. On constate que l'ajout d'un miroir de Bragg augmente significativement l'intensité du champ confiné. Cela a pour conséquence une augmentation de l'intensité de l'onde de diffraction, et par conséquent de la figure de diffraction détectée par le capteur d'image. L'axe des ordonnées de cette figure, représentant l'intensité, est associé à une échelle logarithmique. La figure 5D représente une comparaison de l'intensité d'une figure de diffraction 31 produite par une bille 25 de diamètre 100 nm et d'indice 1.5 placée contre la face inférieure du support. La comparaison est réalisée en considérant les premier mode de réalisation (support 20) et quatrième mode de réalisation (support 220). On observe que le miroir de Bragg permet, à la longueur d'onde de résonance du réseau, une augmentation de l'intensité de l'onde diffractée d'un facteur 3. La sensibilité du dispositif est donc améliorée. Dans cette configuration, le miroir de Bragg comprend une couche de silice et une couche de nitrure de silicium.

Par ailleurs, bien que les exemples précédents soient décrits en relation avec une incidence normale, l'onde incidente 12 peut se propager selon un axe de propagation Z formant un angle différent de $\pi/2$ avec le plan $P_{21}$ de la couche mince 21, moyennant une adaptation de la longueur d'onde de résonance. L'angle d'incidence peut en particulier s'écarter d'une plage angulaire, par exemple jusqu'à $\pi/6$, de part et d'autre de l'incidence normale, et cela pour l'ensemble des modes de réalisation.

La figure 6A représente un cinquième mode de réalisation, dans lequel un support 320 s'étend entre une face supérieure $320_s$ et une face inférieure $320_i$. Le support 320 comporte un guide d'onde planaire 23, adjacent d'une face inférieure $320_i$ du support 320, disposée face au capteur d'image 30. Ce guide d'onde planaire est réalisé selon un cinquième matériau diélectrique, en l'occurrence le nitrure de silicium. L'épaisseur $\varepsilon'$ du guide d'onde planaire 23 est de 110 nm.

Elle est de préférence inférieure à la longueur d'onde, et en particulier inférieure à la demi-longueur d'onde. Dans cet exemple, $\varepsilon' = \lambda/2n_5$, $n_5$ désignant l'indice de réfraction du cinquième matériau constituant le guide d'onde planaire 23, en l'occurrence du nitrure de silicium.

De même que dans les modes de réalisation précédents, le support 320 comporte une couche mince 321, s'étendant selon un plan de couche mince $P_{321}$, cette dernière étant constituée d'un premier matériau diélectrique 21a et comporte des inclusions d'un deuxième matériau diélectrique 21b, définissant un réseau de diffraction. Contrairement aux modes de réalisations précédents, le réseau de diffraction 321 n'a pas pour fonction de confiner la lumière dans ladite couche mince. Il est structuré pour coupler l'onde lumineuse incidente à un mode guidé du guide d'onde planaire 23, selon un taux de couplage $\Gamma$. Autrement dit, le réseau de diffraction 321 est un réseau de couplage, permettant le confinement d'une partie de l'onde incidente 12 dans le guide d'onde planaire 23 s'étendant parallèlement à la couche mince. L'onde générée par le réseau de diffraction pour exciter un mode guidé du guide d'onde 23 est une onde évanescente. La distance $\delta'$ entre la couche mince 321 est le guide d'onde 23 est un paramètre important, conditionnant le taux de couplage $\Gamma$. L'intensité d'une onde évanescente décroissant de façon exponentielle, on comprend que plus la distance $\delta'$ augmente, plus le taux de couplage diminue. Plus le taux de couplage est faible, plus le taux de découplage est également faible, ce qui accroît la durée du confinement des photons dans le guide d'onde 23. L'intensité du champ électromagnétique confiné dans le guide d'onde est alors élevée, en raison du faible taux de découplage. Aussi, la distance entre le guide d'onde 23 et le réseau de diffraction 321 est de préférence non nulle. De préférence, elle est inférieure à la longueur d'onde de résonance du réseau de diffraction 321.

De même que dans les modes de réalisation précédents, le rayonnement découplé vers le capteur d'image constitue une onde 15 formant des interférences destructives avec l'onde résiduelle 14 non couplée au guide d'onde 23, et se propageant vers le capteur d'image selon l'axe de propagation Z. L'éclairement du capteur d'image est donc bloqué. Le rayonnement découplé vers la source de lumière constitue une onde 13 réfléchie.

Ainsi, le support agit en tant que miroir à la longueur d'onde de résonance, à laquelle le couplage avec un mode du guide d'onde 23 a lieu. Contrairement aux modes de réalisation précédents, la réflexion résonante est obtenue par l'ensemble formé par le réseau de diffraction, agissant en tant que réseau de couplage, et le guide d'onde planaire 23. Lors des modes de réalisation précédents, la réflexion résonante est obtenue par le réseau de diffraction seul, ce dernier confinant le faisceau électromagnétique dans le plan de la couche mince 21, cette dernière agissant en tant que guide d'onde.

De façon commune à l'ensemble des modes de réalisation présentés, le capteur d'image 30 se trouve selon une configuration en champ sombre.

La distance $\delta'$ entre le réseau de diffraction de la couche mince 321 et le guide d'onde planaire 23 peut être nulle, la couche mince 321 étant alors au contact du guide d'onde 23. Le couplage est important, mais l'intensité du champ électromagnétique dans le guide d'onde est faible, du fait d'un découplage également important. Lorsque cette distance est trop importante, par exemple supérieure à la longueur d'onde, le couplage n'est plus assuré. Ainsi, la distance δ' est de préférence suffisamment élevée pour obtenir un taux de couplage faible, typiquement inférieur à 1%. Typiquement, la distance δ' est inférieure à la longueur d'onde. Les inventeurs considèrent qu'une δ' distance de λ/2n constitue un bon compromis, n désignant l'indice du matériau s'étendant entre le guide d'onde planaire 23 et la couche mince 321, en l'occurrence de la silice.

Une condition importante pour qu'un couplage effectif se produise est que la période du réseau de couplage, qu'il s'agisse de la période Px selon l'axe X ou Py selon l'axe Y, soit telle que

$$ Px \ = \ Py \ = \frac{\lambda}{n_{eff}} \, (1) $$

$n_{eff}$ étant un indice effectif du réseau de diffraction de la couche mince.
L'indice $n_{eff}$ est obtenu par la relation suivante :

$$ k\, \varepsilon' \sqrt{n_c^2 - n_{eff}^2} - \mathrm{atan}\left( g_1 \frac{\sqrt{n_{eff}^2 - n_{g1}^2}}{\sqrt{n_c^2 - n_{eff}^2}} \right) - \mathrm{atan}\left( g_2 \frac{\sqrt{n_{eff}^2 - n_{g2}^2}}{\sqrt{n_c^2 - n_{eff}^2}} \right) - m\, \pi = 0 \ (2) $$

Avec:

- k=2π/λ;
- m désigne l'ordre du mode, avec m = 1 dans cet exemple ;
- $n_c$ est l'indice du matériau constituant le guide d'onde planaire ;
- $n_{g1}$ et $n_{g2}$ sont les indices des matériaux bordant le guide d'onde planaire, en l'occurrence respectivement la silice et l'air ;
- $g_1 \ = \frac{n_c^2}{n_{g1}^2}$ et $g_2 \ = \frac{n_c^2}{n_{g2}^2}$,

Les expressions (1) et (2) permettent de définir, connaissant les matériaux constituant le guide d'onde et adjacent au guide d'onde, la longueur d'onde de résonance λ, ainsi que la période du réseau de couplage.
La figure 6B représente l'évolution de la réflectance en fonction de la longueur d'onde, respectivement pour le premier mode de réalisation (support 20 comprenant un réseau de diffraction seul), le quatrième mode de réalisation (support 220 comprenant un miroir de Bragg et un réseau de diffraction) et ce cinquième mode de réalisation (support 320 comprenant un guide d'onde couplé à un réseau de diffraction). On observe un décalage de la longueur d'onde de résonance à laquelle la réflectance est maximale.
La figure 6C représente l'évolution de l'intensité du champ électrique confiné, au niveau de la face inférieure du support, représentative de l'intensité du champ électromagnétique confiné, en fonction de la longueur d'onde, respectivement, pour le premier mode de réalisation (support 20), le quatrième mode de réalisation (support 220) et ce cinquième mode de réalisation (support 320). Ce mode de réalisation permet d'obtenir une intensité maximale à la longueur d'onde de résonance de 431 nm. Le facteur de qualité Q est également plus élevé que celui des précédents modes de réalisation.
Lorsqu'une particule 25 est placée au contact de la face inférieure 320ᵢ du support 320, où à une distance sub-longueur d'onde du guide d'onde 23, elle est soumise à un champ électromagnétique intense confiné dans le guide d'onde, et forme une onde de diffraction 26 se propageant vers le plan de détection du capteur d'image 30, permettant la détection d'une figure de diffraction 31. La figure 6D représente des simulations de l'intensité telle figure de diffraction, l'onde de diffraction 26 étant produite par une bille de diamètre 100 nm placée au contact de la face inférieure 320ᵢ, respectivement, de la gauche vers la droite, pour les premier (support 20), quatrième (support 220) et cinquième mode de réalisation (support 320), l'échelle des niveaux de gris étant commune. L'intensité du signal se propageant sur le détecteur est plus intense selon la configuration du cinquième mode de réalisation. Aussi, ce mode de réalisation semble présenter la sensibilité la plus élevée.
La figure 6E représente une simulation d'un profil d'intensité, dans le plan de détection P, de l'onde 26 diffractée par la particule 25 dans les configurations décrites en lien avec la figure 6D. Elle confirme la meilleure sensibilité de ce cinquième mode de réalisation.

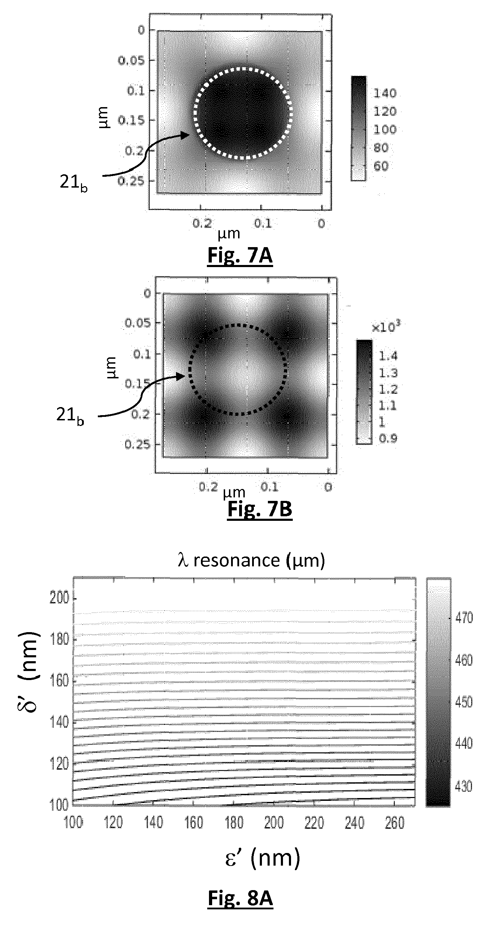

Les figures 7A et 7B représentent respectivement la distribution spatiale de l'intensité du champ électrique au niveau de la face inférieure du support, correspondant respectivement au quatrième mode de réalisation et au cinquième mode de réalisation. La figure 7A est réalisée en considérant que le réseau de diffraction de la couche mince 21 du support 220, décrit en lien avec la figure 5A, constitue le guide d'onde. La figure 7B est obtenue en considérant le cinquième mode de réalisation, dans lequel le guide d'onde du support 320 est le guide d'onde planaire 23, le réseau de diffraction de la couche mince 321 agissant en tant que réseau de couplage. On a représenté, sur ces figures, la trace des inclusions formées dans le réseau de diffraction par le deuxième matériau diélectrique $21_b$. L'échelle des axes des abscisses et des ordonnées représente les dimensions transversales selon le plan selon lequel s'étend le guide d'onde, l'unité étant le $\mu$m. On observe que l'intensité du faisceau électromagnétique confiné est plus homogène dans le cinquième mode de réalisation.

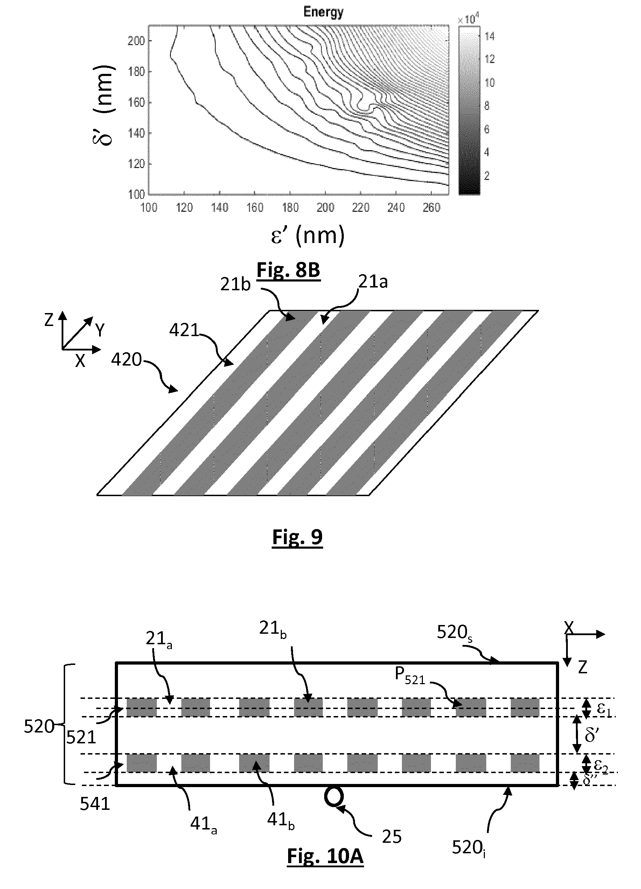

La figure 8A représente un exemple de dimensionnement d'un réseau de diffraction selon ce cinquième mode de réalisation. Elle montre l'évolution de la longueur d'onde de résonance en fonction de l'épaisseur $\varepsilon'$ du guide d'onde planaire 23, formant l'axe des abscisses, et la distance $\delta'$ entre le guide d'onde et le réseau de diffraction formé dans la couche mince 321, formant l'axe des ordonnées. La figure 8B représente, en fonction des mêmes paramètres que la figure 8A, l'évolution de l'énergie du faisceau confiné, à l'interface entre la couche mince 321 et la face inférieure $320_i$ du support 320. Les figures 8A et 8B illustrent le fait que le dimensionnement d'un tel mode de réalisation peut être réalisé à l'aide de codes de simulations à la disposition de l'homme du métier.

La figure 9 représente un support 420 selon un sixième mode de réalisation, s'étendant entre une face inférieure $420_i$ et une face supérieure $420_s$. Le support 420 comporte une couche mince 421, s'étendant selon un plan de couche mince $P_{421}$, et définissant un réseau de diffraction s'étendant selon une seule dimension. La couche mince 421 est réalisée selon un premier matériau 21a, par exemple de la silice. Elle comporte des inclusions s'étendant selon une direction longitudinale (selon l'axe Y), dans le plan de la couche mince, définissant des bandes parallèles les unes aux autres. Chaque inclusion a, selon une direction perpendiculaire à ladite direction longitudinale, c'est-à-dire selon l'axe X, une largeur de dimension inférieure à la longueur d'onde, voire inférieure à la demi-longueur d'onde. Un tel réseau est connu par la désignation « réseau 1D », par opposition aux réseaux bidimensionnels décrits dans les modes de réalisation précédents. Il est possible de dimensionner un tel réseau de façon à ce qu'il agisse en tant que réseau de diffraction, de façon analogue aux réseaux représentés dans les modes de réalisation précédents, moyennant le recours à une source de lumière polarisée.

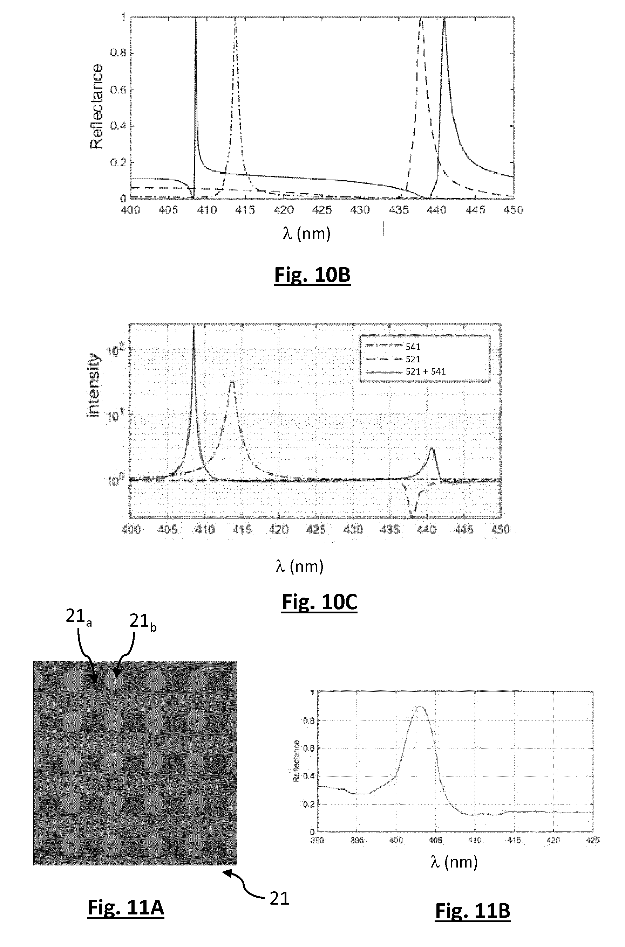

La figure 10 représente un support 520 selon un septième mode de réalisation, s'étendant entre une face inférieure $520_i$ et une face supérieure $520_s$. Le support 520 comporte deux couches minces 521, 541, distantes l'une de l'autre, chaque couche mince formant un réseau de diffraction, et s'étendant parallèlement à un plan de couche mince $P_{521}$. Sur la figure 10A, le support comporte une première couche mince 521 comportant un premier matériau $21_a$, en l'occurrence de la silice, dans laquelle sont réalisées des inclusions constituées d'un deuxième matériau $21_b$, en l'occurrence du nitrure de silicium, s'étendant selon des bandes parallèles, de façon analogue au mode de réalisation représenté sur la figure 9. Cette première couche mince, d'épaisseur $\varepsilon_1=130$nm constitue un premier réseau de diffraction, de période 264 nm, la largeur de chaque inclusion étant de 132 nm.

Le support 520 comporte une deuxième couche mince 541 comportant un sixième matériau $41_a$, en l'occurrence de la silice, d'un sixième indice de réfraction $n_6$, dans laquelle sont réalisées des inclusions $41_b$ constituées d'un septième matériau, d'un septième indice de réfraction $n_7$, en l'occurrence du nitrure de silicium, s'étendant selon des bandes parallèles, de façon analogue à la première couche mince 521. Cette deuxième couche mince, d'épaisseur $\varepsilon_2=150$nm constitue un deuxième réseau de diffraction, de période 264 nm, la largeur de chaque inclusion étant de 158 nm. La distance $\delta'$ entre la première et la deuxième couche mince s'élève à 100 nm. La deuxième couche mince est située à une distance $\delta''$ de 50 nm de la face inférieure du 20i du support 20. Selon ce mode de réalisation, les sixièmes et septièmes matériaux correspondent respectivement au premier et au deuxième matériau.

Ainsi, selon ce mode de réalisation, le support comprend un premier réseau et un deuxième réseau de diffraction, s'étendant parallèlement l'un à l'autre, et distants d'une distance inférieure à la longueur d'onde.

Les figures 10B et 10C représentent respectivement l'évolution de la réflectance et l'intensité du champ électrique, en fonction de la longueur d'onde, dans différentes configurations. On a tout d'abord simulé chaque réseau de diffraction pris isolément. Dans ce cas, les courbes des figures 10B et 10C représentent respectivement la réflectance de chaque réseau, et l'intensité du champ électrique confinée dans chaque réseau (521, 541). Puis on a simulé un support comprenant les deux réseaux combinés (521 + 541), tel que représenté sur la figure 10A. Dans ce dernier cas, l'intensité du champ électrique modélisée sur la figure 10C correspond au deuxième réseau 541, ce dernier s'étendant entre le premier réseau 521 et la face inférieure $520_i$ du support 520, à une distance de 50 nm de cette dernière. La réflectance correspond à la réflectance de la combinaison des deux réseaux. Il ressort que la combinaison des deux réseaux augmente significativement l'intensité du champ électromagnétique confiné dans le réseau de diffraction le plus proche de la face inférieure $520_i$ du support 520, cette dernière étant destinée à être placée au contact ou à proximité d'une particule 25 de l'échantillon. On remarque le décalage de la longueur de résonnance entre chaque réseau pris isolément et la combinaison des réseaux.

La longueur d'onde de résonnance de chaque réseau peut être différente, comme on peut l'observer dans cet exemple. Elle peut également être identique, à un terme d'incertitude près, pour chaque réseau. Dans ce cas, le premier et le deuxième réseau ont la même structure, et lorsque l'espacement entre les deux réseaux est égal à la moitié de la longueur d'onde, les deux réseaux forment alors une cavité de Fabry-Perot.

Ces simulations montrent que plusieurs réseaux de diffraction, s'étendant de préférence parallèlement les uns aux autres, peuvent être réalisés dans un support 520. L'exemple précédent décrit une superposition de deux réseaux de diffraction monodimensionnels, mais l'invention couvre naturellement la superposition de réseaux de diffraction bidimensionnels, tels que décrits dans les modes de réalisation précédents.

La figure 11A représente un réseau de diffraction 21 conçu par les inventeurs, et observé à l'aide d'un microscope électronique à balayage. Le réseau est similaire à celui représenté sur la figure 1B, des piliers de nitrure de silicium $21_b$, de diamètre 120 nm, étant répartis selon un maillage bidimensionnel, dans une couche mince de silice $21_a$. Le pas du maillage est de 270 nm. La figure 11B représente une variation de la réflectance mesurée en mettant en oeuvre ce réseau de diffraction. On observe une bonne cohérence entre la courbe de la figure 11B, obtenue à l'aide de données mesurées, et la courbe de la figure 2A, obtenue à l'aide de données simulées.

Bien que dans les exemples décrits, le réseau de diffraction est obtenu à partir d'inclusions de nitrure de silicium dans une couche mince de silice, ce couple de matériaux n'est nullement limitatif et l'invention pourra mettre en oeuvre d'autres matériaux, sous réserve d'une différence d'indice suffisante, en particulier supérieure à 0,25. Des trous d'air dans une matrice de silice sont par exemple envisageables. Cette observation vaut pour l'ensemble des modes de réalisation, y compris pour les matériaux constituant le miroir de Bragg exposé dans le quatrième mode de réalisation. Le dimensionnement précis de chaque réseau peut être obtenu par l'homme du métier en mettant en oeuvre des codes de calcul simulant la propagation d'ondes électromagnétiques, permettant de définir la structuration, la période du réseau, la longueur d'onde de résonance ainsi que le facteur de qualité.

Les réseaux décrits dans cette description peuvent être réalisés en utilisant des techniques de microfabrication connues, par exemple la lithographie à faisceau d'électrons, connues sous la désignation e-beam, la photolithographie (par exemple à une longueur d'onde de 193 nm) ou par empreinte, technique connue sous la désignation anglosaxonne « Imprint ».

**Revendications**

1. Dispositif pour réaliser une image d'un échantillon comportant :

   - une source de lumière (11), apte à émettre une onde lumineuse (12), dite onde incidente, à une longueur d'onde ($\lambda$), selon un axe de propagation (Z), vers l'échantillon ;
   - un capteur d'image (30) ;
   - un support (20, 120, 220, 320, 420, 520), apte à recevoir l'échantillon, disposé entre la source de lumière (11) et le capteur d'image (30) ;

   **caractérisé en ce que** :

   - le support comprend une première couche mince (21, 321, 421, 521), comprenant un premier matériau transparent à ladite longueur d'onde ($21_a$) d'un premier indice de réfraction ($n_1$), s'étendant selon un plan ($P_{21}$, $P_{321}$, $P_{421}$, $P_{521}$), dit plan de la couche mince,
   - la première couche mince comportant une pluralité d'inclusions, réalisées en un deuxième matériau ($21_b$) transparent à ladite longueur d'onde d'un deuxième indice de réfraction ($n_2$);
   - la distance entre deux inclusions adjacentes étant inférieure à ladite longueur d'onde ($\lambda$);
   - les dites inclusions définissant un premier réseau de diffraction dans la première couche mince, apte à confiner une partie de l'onde incidente (12) selon un plan parallèle au plan de couche mince, les inclusions étant réparties de façon à former un réseau bidimensionnel périodique selon deux axes (X,Y) du plan de la couche mince ;
   - le dispositif ne comportant pas d'optique de grossissement entre le support (20) et le capteur d'image (30).

2. Dispositif selon la revendication 1, dans lequel le premier réseau de diffraction est configuré pour engendrer, à ladite longueur d'onde, une réflexion résonante de l'onde incidente (12), de façon à réfléchir une partie de ladite onde lumineuse incidente vers la source de lumière (11).

3. Dispositif selon la revendication 1 ou la revendication 2, dans lequel le support étant délimité par une face inférieure ($20_i$, $120_i$, $220_i$, $320_i$, $420_i$, $520_i$) et une face supérieure ($20_s$, $120_s$, $220_s$, $320_s$, $420_s$, $520_s$), la première couche mince est apte à confiner une partie de la lumière incidente dans un guide d'onde adjacent de l'une desdites faces.

4. Dispositif selon la revendication 3, dans lequel la première couche mince (21, 321, 421) est adjacente à l'une desdites faces, le premier réseau de diffraction étant un réseau résonant, apte à confiner une partie de l'onde incidente dans le plan de couche mince, la première couche mince formant alors ledit guide d'onde.

**5.** Dispositif selon la revendication 3 ou la revendication 4, dans lequel le support (220) comporte également un miroir de Bragg ($22_{ab}$), disposé entre la source de lumière et la première couche mince (21), et formé par au moins deux couches adjacentes, s'étendant parallèlement à la première couche mince (21), réalisées selon un troisième matériau ($22_a$) d'un troisième indice et un quatrième matériau ($22_b$) d'un quatrième indice, ledit troisième indice étant différent dudit quatrième indice.

**6.** Dispositif selon la revendication 5, dans lequel le troisième matériau ($22_a$) et le quatrième matériau ($22_b$) correspondent respectivement au premier matériau ($21_a$) et au deuxième matériau ($21_b$).

**7.** Dispositif selon l'une quelconque des revendications 5 ou 6, dans lequel le miroir de Bragg ($22_{ab}$) est placé à une distance de la première couche mince (21) sensiblement égale à un multiple impair du quart de la longueur d'onde ($\lambda$).

**8.** Dispositif selon l'une quelconque des revendications précédentes, dans lequel le support (520) comporte une deuxième couche mince (541), s'étendant parallèlement à la première couche mince (521),

- la deuxième couche mince comprenant un sixième matériau ($41_a$) transparent à ladite longueur d'onde, d'un sixième indice de réfraction ($n_6$) ;
- la deuxième couche mince comportant une pluralité d'inclusions, réalisées en un septième matériau ($41_b$) transparent à ladite longueur d'onde, d'un septième indice de réfraction ($n_7$);
- deux inclusions adjacentes de la deuxième couche mince étant distantes l'une de l'autre d'une distance inférieure à ladite longueur d'onde ($\lambda$), de telle sorte que ces inclusions définissent un réseau de diffraction dans la deuxième couche mince, apte à confiner une partie de l'onde incidente (12) dans la deuxième couche mince ;
- la distance entre la première couche mince (521) et la deuxième couche mince (541) étant inférieure à ladite longueur d'onde ($\lambda$).

**9.** Dispositif selon la revendication 3, dans lequel :

- le support (320) comporte un guide d'onde planaire (23), s'étendant parallèlement à la première couche mince (321) ;
- la première couche mince (321) est disposée entre le guide d'onde planaire et la source de lumière (11), le premier réseau de diffraction étant configuré pour engendrer un couplage optique avec le guide d'onde planaire, de telle sorte qu'une partie de l'onde incidente (12) est couplée au guide d'onde planaire.

**10.** Dispositif selon la revendication 9, dans lequel le support (320) est délimité par une face inférieure ($320_i$), disposée en vis-à-vis du capteur d'image (30), et dans lequel le guide d'onde planaire (23) est adjacent de la face inférieure.

**11.** Procédé d'observation d'un échantillon, comprenant une particule (25), le procédé comportant les étapes suivantes :

- disposer l'échantillon au contact d'un support (20, 120, 220, 320, 420, 520), ledit support étant disposé entre une source de lumière (11) et un capteur d'image (30) ;
- illuminer le support et l'échantillon à l'aide d'une onde lumineuse incidente (12), produite par la source de lumière (11) ;
- le support (20) comportant une première couche mince (21, 321, 421, 521), s'étendant selon un plan de couche mince ($P_{21}$, $P_{321}$, $P_{421}$, $P_{521}$), formant un premier réseau de diffraction, confinant une partie de l'onde incidente (12) selon un plan parallèle au plan de la couche mince, formant ainsi un faisceau confiné se propageant selon ledit plan parallèle au plan de couche mince ;
- le support réfléchissant une partie de l'onde incidente (12) et bloquant une transmission de l'onde incidente vers le capteur d'image (30) ;
- collecter, sur le capteur d'image (30), une onde de diffraction (26) générée par ladite particule (25), l'onde de diffraction (26) étant formée à partir du faisceau confiné, une partie de l'onde de diffraction (26) étant détectée par le capteur d'image (30) ;
- acquérir une image représentative de l'onde de diffraction (26).

**12.** Procédé selon la revendication 11, dans lequel :

- le support est délimité par une face inférieure ($20_i$, $120_i$, $220_i$, $320_i$, $420_i$, $520_i$) et une face supérieure ($20_s$, $120_s$, $220_s$, $320_s$, $420_s$, $520_s$), la face inférieure étant située en regard du capteur d'image (30) ;
- la première couche mince confine une partie de la lumière incidente dans un guide d'onde (21, 23, 541) adjacent de l'une desdites faces, pour former un faisceau dit confiné se propageant dans ledit guide d'onde ;
- et dans lequel l'échantillon est placé au contact de la face délimitant le guide d'onde.

13. Procédé selon l'une quelconque des revendications 11 à 12, dans lequel le guide d'onde est formé par la première couche mince (21).

14. Procédé selon l'une quelconque des revendications 11 ou 12, dans lequel le support comprend une deuxième couche mince (541), s'étendant parallèlement à la première couche mince (521), et formant un deuxième réseau de diffraction, apte à confiner une partie de l'onde incidente (12) dans la deuxième couche mince (541), la première et la deuxième couche mince étant distantes l'une de l'autre d'une distance inférieure à ladite longueur d'onde.

15. Procédé selon l'une quelconque des revendications 11 ou 12, le guide d'onde est un guide d'onde planaire (23), adjacent de la face inférieure ($320_i$) du support (320), la première couche mince (321) agissant pour coupler une partie de l'onde incidente (12) au guide d'onde planaire.

16. Procédé selon l'une quelconque des revendications 12 à 15, dans lequel la particule est disposée à une distance du guide d'onde (21, 23, 541) inférieure à ladite longueur d'onde.

**Fig. 1A**

**Fig. 1B**

**Fig. 2A**

**Fig. 2B**

**Fig. 2C**

**Fig. 2D**

**Fig. 2E**

**Fig. 2F**

$d_{25}$ (µm)

**Fig. 3**

**Fig. 4**

**Fig. 5A**

**Fig. 5B**

**Fig. 5C**

**Fig. 5D**

**Fig. 6A**

λ (nm)

**Fig. 6B**

λ (nm)

**Fig. 6C**

**Fig. 6D**

**Fig. 6E**

**Fig. 7A**

**Fig. 7B**

λ resonance (μm)

ε' (nm)

**Fig. 8A**

**Fig. 8B**

**Fig. 9**

**Fig. 10A**

**Fig. 10B**

**Fig. 10C**

**Fig. 11A**

**Fig. 11B**

Europäisches
Patentamt

European
Patent Office

Office européen
des brevets

## RAPPORT DE RECHERCHE EUROPEENNE

Numéro de la demande

EP 16 19 0242

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2008/062418 A1 (MAGNUSSON ROBERT [US] ET AL) 13 mars 2008 (2008-03-13) * alinéas [0008], [0050], [0052] - [0054], [0061], [0065]; figures 2-4,17,21,25,26 * ----- | 1-16 | INV. G01N15/14 G01N21/41 G01N21/552 G01N21/77 G01N15/10 |
| Y | US 2003/068657 A1 (LIN BO [US] ET AL) 10 avril 2003 (2003-04-10) * alinéas [0127], [0140], [0176], [0273]; figure 4 * ----- | 1-16 | |
| A | US 2007/147726 A1 (KIESEL PETER [US] ET AL) 28 juin 2007 (2007-06-28) * alinéas [0124], [0130], [0199] * ----- | 1,5-8, 11,14 | |
| A | US 2014/120603 A1 (DUTTA ACHYUT [US]) 1 mai 2014 (2014-05-01) * alinéa [0050]; figure 3 * ----- | 11 | |

DOMAINES TECHNIQUES
RECHERCHES (IPC)

G01N

Le présent rapport a été établi pour toutes les revendications

| Lieu de la recherche | Date d'achèvement de la recherche | Examinateur |
|---|---|---|
| La Haye | 31 janvier 2017 | Eidmann, Gunnar |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.....................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 19 0242

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2017

| Document brevet cité au rapport de recherche | Date de publication | Membre(s) de la famille de brevet(s) | Date de publication |
|---|---|---|---|
| US 2008062418 A1 | 13-03-2008 | CA 2663160 A1 | 13-03-2008 |
| | | CN 101617211 A | 30-12-2009 |
| | | CN 102288552 A | 21-12-2011 |
| | | EP 2059789 A1 | 20-05-2009 |
| | | HK 1138066 A1 | 11-05-2012 |
| | | JP 5547484 B2 | 16-07-2014 |
| | | JP 5886364 B2 | 16-03-2016 |
| | | JP 2010502996 A | 28-01-2010 |
| | | JP 2014178329 A | 25-09-2014 |
| | | JP 2016075713 A | 12-05-2016 |
| | | US 2008062418 A1 | 13-03-2008 |
| | | US 2012140208 A1 | 07-06-2012 |
| | | WO 2008031071 A1 | 13-03-2008 |
| US 2003068657 A1 | 10-04-2003 | US 2003068657 A1 | 10-04-2003 |
| | | US 2006281077 A1 | 14-12-2006 |
| US 2007147726 A1 | 28-06-2007 | JP 5558654 B2 | 23-07-2014 |
| | | JP 2007171177 A | 05-07-2007 |
| | | US 2007147726 A1 | 28-06-2007 |
| US 2014120603 A1 | 01-05-2014 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- WO 2008090330 A
- US 20120218379 A
- WO 2011045360 A
- US 20080062418 A